# EUROPÄISCHE PATENTSCHRIFT

(11) **EP 1 551 676 B1**
(45) Veröffentlichungstag und Bekanntmachung des Hinweises auf die Patenterteilung: **26.04.2006**
(21) Anmeldenummer: 01974333.5
(22) Anmeldetag: 08.10.2001
(51) Int. Cl.: B60R 22/46

(54) **SICHERHEITSGURTAUFROLLER MIT EINER VORSTRAFFEINRICHTUNG**
SEATBELT RETRACTOR COMPRISING A PRETENSIONING DEVICE
ENROULEUR DE CEINTURE DE SECURITE A PRETENSIONNEUR

(30) Priorität: 21.12.2000 DE 10064352
(43) Veröffentlichungstag der Anmeldung: 13.07.2005
(73) Patentinhaber: AUTOLIV DEVELOPMENT AB, 447 83 Vargarda (SE)
(72) Erfinder: LUCHT, Andreas, 25358 Horst (DE); WITTENBERG, Geert, Helge, 22848 Norderstedt (DE); MATZEN, Frank, 22459 Hamburg (DE); ZIEL, Erik, 25451 Quickborn (DE); SINGER, Klaus-Peter, 22399 Hamburg (DE)
(74) Vertreter: Müller, Karl-Ernst
(86) Internationale Anmeldenummer: PCT/EP2001/011591
(87) Internationale Veröffentlichungsnummer: WO 2002/049887

(56) Entgegenhaltungen:
- EP-A- 0 893 313
- DE-A- 3 019 298

## Beschreibung

Die Erfindung betrifft einen Sicherheitsgurtaufroller, insbesondere für den Einsatz in Kraftfahrzeugen, mit einem fahrzeugsensitiv und/oder gurtbandsensitiv angesteuerten Blockiersystem und mit einer auf die Gurtwelle einwirkenden Straffeinrichtung, wobei die Gurtwelle mit einem von einem Elektromotor als Strafferantrieb über ein zwischengeschaltetes Getriebe angetriebenen Abtriebsrad kuppelbar ist und das Getriebe mindestens eine Schaltstellung zur Ausführung einer Vorabstraffung des Insassen durch Rückdrehung der Gurtwelle in Aufwickelrichtung aufweist.

Ein Sicherheitsgurtaufroller mit den vorgenannten Merkmalen ergibt sich aus der EP 0 893 313 A2. An die Gurtwelle des Gurtaufrollers ist ein sowohl in der Gurtabwickelrichtung als auch in der Gurtaufwickelrichtung drehbarer Elektromotor ankuppelbar, von welchem über ein zwischengeschaltetes Getriebe in Abhängigkeit von bestimmten Fahrsituationen einstellbare Drehmomente auf die Gurtwelle zur Einwirkung bringbar sind. Dabei kann in einer vorgegebenen Schaltposition des Getriebes das vom Elektromotor gelieferte Drehmoment zum Straffen des Gurtbandes auf die Gurtwelle übertragen werden. Hinsichtlich eines derartigen Straffens ist bei dem bekannten Sicherheitsgurtaufroller in eine sogenannte Vorstraffung und in eine Leistungsstraffung unterschieden. Im Rahmen der sogenannten Vorstraffung wird der angeschnallte Insasse bei Auftreten von Geschwindigkeitsänderungen bzw. Verzögerungswerten unterhalb der für die Auslösung der Leistungsstraffung bei einem Unfall maßgeblichen Auslöseschwelle mit einem verminderten Drehmoment des Elektromotors in seine normale Sitzposition gezogen und Gurtlose aus dem Sicherheitsgurt herausgenommen. Da bei Nachlassen der Geschwindigkeitsänderung die Vorab-Straffung beendet wird und als reversibler Vorgang bei Auftreten einer weiteren entsprechenden Fahrsituation erneut eingeleitet wird, wird dem angeschnallten Fahrzeuginsassen ein Gefühl aktiver Sicherheit vermittelt. Wird die Auslöseschwelle für die Leistungsstraffung bei einem Unfall überschritten, arbeitet der Elektromotor mit einem entsprechend hohen Drehmoment.

Im Zusammenhang mit der Vorstraffung des Sicherheitsgurtes kann die nachteilige Situation einer Selbstblockade des Sicherheitsgurtes eintreten dadurch, daß über die Vorstraffung alle Gurtlose aus dem Sicherheitsgurtsystem genommen ist und der Sicherheitsgurt am Körper der angeschnallten Person stramm anliegt, wobei je nach Fahrsituation am Ende des Vorstraffervorganges nicht ausgeschlossen ist, daß über eine geringe Vorwärtsverlagerung des Körpers des angeschnallten Insassen die Sperrscheibe des gurtaufrollerseitigen Blockiersystems in einen lastübertragenden Eingriff mit einem Gehäuseteil einsteuert wird. Soweit in dieser Sperrstellung der Sperrscheibe es einer Rückdrehung der Gurtwelle in Gurteinzugsrichtung bedarf, um die Sperrscheibe aus ihrer lastübertragenden Stellung herauszuführen, muß in nachteiliger Weise auch nach Abschluß jeder reversiblen Vorstraffung eine zusätzliche Nachstraffung mit einer etwas höheren Kraft als beim Vorstraffen erfolgen, was zu einer unerwünschten Belastung des Systems bzw. Minderung des Tragekomforts für den Fahrzeuginsassen führt.

Der Erfindung liegt daher die Aufgabe zugrunde, bei einem Sicherheitsgurtaufroller mit den gattungsgemäßen Merkmalen, ein frühzeitiges Ansprechen des Blockiersystems zu vermeiden und dadurch eine Selbstblockade auszuschalten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß in den Kraftübertragungsweg zwischen Elektromotor und Gurtwelle eine während der Drehung des Abtriebsrades in Gurteinzugsrichtung und in Gurtauszugsrichtung angesteuerte und nur während des Straffvorganges wirksame Vorverriegelungseinrichtung für die Gurtwelle eingeschaltet ist, deren Verriegelung mit der Gurtwelle bei Überschreiten einer vorbestimmten, in Gurtauszugsrichtung auf die Gurtwelle einwirkenden Last aufgehoben wird. Die Erfindung beruht somit auf dem Prinzip, daß während des Vorstraffvorganges die Vorverriegelungseinrichtung permanent zugeschaltet ist, so daß während des Vorstraffprozesses bzw. unmittelbar im Anschluß daran die Gurtwelle über die Vorverriegelungseinrichtung in Gurtauszugsrichtung gesperrt ist, so daß es bei einem Zug am Gurtband zunächst nicht zu einem Ansprechen der Sperrscheibe des Blockiersystems kommen kann. Kommt es am Ende des Vorstraffprozesses dann nicht zu einer Belastung des Gurtbandes in Gurtauszugsrichtung, wird die Vorverriegelungseinrichtung deaktiviert und das vorgestraffte Gurtsystem durch eine kurze Drehung des Abtriebsrades über den Elektromotor in Gurtauszugsrichtung entlastet, so daß die normalen Gurtaufrollerfunktionen wieder hergestellt sind und insbesondere der fahrzeugsensitiv und/oder gurtbandsensitiv gesteuerte Blockiermechanismus in Funktionsbereitschaft gesetzt ist.

Soweit während der Einwirkung der Vorverriegelungseinrichtung es zu einem schweren Unfall kommt, bei dem die Auslösung des gurtaufrollerseitigen Blockiersystems mit einer Blockierung der Gurtwelle gegen eine weitere Drehung in Gurtauszugsrichtung erforderlich ist, wird durch eine entsprechende Ausbildung der Kupplung zwischen Abtriebsrad und Gurtwelle die Einwirkung der Vorverriegelungseinrichtung aufgehoben, so daß durch eine Drehung der Gurtwelle in Gurtauszugsrichtung die Aussteuerung der Sperrscheibe in den lastübertragenden Eingriff mit dem Gehäuse des Gurtaufrollers erfolgen kann.

Nach einem Ausführungsbeispiel der Erfindung ist vorgesehen, daß die Vorverriegelungseinrichtung durch ein selbsthemmend ausgelegtes Getriebe mit einem mit dem außenverzahnten Abtriebsrad in ständigem Eingriff stehenden und von einem Antrieb angetriebenen Getriebeteil gebildet ist, wobei der Antrieb für das selbsthemmende Getriebe für eine mit der Drehung des Abtriebsrades synchrone Bewegung des mit dem Abtriebsrad kämmenden Getriebeteils sorgt. Die Auslegung des auf das Abtriebsrad einwirkenden Getriebes als selbsthemmendes Getriebe bedeutet, daß nur bei einer aktiven Drehbewegung des Getriebeteils mittels des ihm zugeordneten Antriebs eine Drehung des Abtriebsrades möglich ist, so daß bei stehendem Getriebeteil das Abtriebsrad in seiner Drehbewegung blockiert ist. Soweit also während des Straffvorganges und insbesondere unmittelbar an dessen Ende das Getriebeteil aktiv und synchron in der Drehrichtung des Abtriebsrades in Strammrichtung gedreht wird bzw. der Antrieb für das selbsthemmende Getriebe am Ende der Vorstraffung abgeschaltet ist, sind das Straffergetriebe und damit die daran gekuppelte Gurtwelle gegen eine Drehung in Gurtauszugsrichtung blockiert, so daß die Vorverriegelung ohne jedes Bewegungsspiel im zwischen dem Elektromotor und der Gurtwelle angeordneten Getriebe wirksam ist. Nach Beendigung der Vorstraffung drehen das Abtriebsrad und das Getriebeteil in Gurtauszugsrichtung um einen geringen Drehwinkel zurück, so daß das durch die Vorstraffung vorgespannte Gurtsystem sanft entlastet und die zwischen der Gurtwelle und dem Abtriebsrad eingeschaltete Kupplung wieder ausgesteuert wird. Insofern ist nach einem Ausführungsbeispiel der Erfindung vorgesehen, daß der Antrieb für die Drehung des Getriebeteils in beiden Drehrichtungen des Abtriebsrades eingerichtet ist.

Mit der diesbezüglichen Ausgestaltung der Vorverriegelungseinrichtung ist der Vorteil verbunden, daß trotz der Anordnung eines selbsthemmenden Getriebes zwischen dem Elektromotor und der Gurtwelle zur Ausführung der sogenannten Leistungsstraffung aufgrund der erfindungsgemäßen Realisierung der Selbsthemmung über das nur im Antriebsfall angetriebene Getriebeteil der Wirkungsgrad des selbsthemmenden Getriebes auf über 50 Prozent verbessert ist. Aufgrund der mit der Drehung des Abtriebsrades gleichgerichteten Drehrichtung des Getriebeteils treten im Gesamtgetriebe keine zusätzlichen Verluste durch Reibung auf. Soweit zwischen dem als Strafferantrieb wirkenden Elektromotor und dem Abtriebsrad noch ein Übersetzungsgetriebe angeordnet ist, brauchen bei dem erfindungsgemäßen Angriff des Getriebeteils des selbsthemmenden Getriebes an dem Abtriebsrad im Falle einer Belastung der Gurtwelle in Gurtauszugsrichtung die Haltekräfte nur bis zu dem Abtriebsrad aufgefangen werden, so daß eine entsprechend robuste Auslegung der Getriebestufen zwischen Abtriebsrad und Elektromotor liegenden Getriebestufen nicht erforderlich ist.

Nach einem Ausführungsbeispiel der Erfindung ist vorgesehen, daß zum Antrieb des Getriebeteils ein gesonderter Elektromotor vorgesehen ist. Hiermit ist der Vorteil verbunden, daß der Antrieb für die Drehbewegung des Getriebeteils in den jeweiligen Drehrichtungen unterstützend zu dem Elektromotor als Strafferantrieb für die Drehung des Abtriebsrades wirkt, so daß der Elektromotor mit einer entsprechend geringeren Leistung ausgelegt werden kann.

Alternativ kann vorgesehen sein, daß das Getriebeteil an den den Strafferantrieb bildenden Elektromotor gekoppelt ist; in diesem Fall wirkt sich der hohe Wirkungsgrad des selbsthemmenden Getriebes positiv aus.

Nach einem bevorzugten Ausführungsbeispiel der Erfindung besteht das angetriebene Getriebeteil aus einer selbsthemmend ausgelegten und mit der Schneckenverzahnung des Abtriebsrades kämmenden Schnecke.

Alternativ kann auch vorgesehen sein, daß das angetriebene Getriebeteil aus einem mit der Schneckenverzahnung des Abtriebsrades kämmenden und durch Anordnung einer Gegenverzahnung selbsthemmend ausgelegten Stirnrad besteht.

Kommt es während des Straffvorganges bereits zu einem Unfall mit einer entsprechenden Belastung der Gurtwelle in Gurtauszugsrichtung, so ist nach einem Ausführungsbeispiel der Erfindung vorgesehen, daß die Kupplung zwischen Abtriebsrad und Gurtwelle zu einem Aufheben der über das Abtriebsrad auf die Gurtwelle wirkenden Vorverriegelung bei Auftreten der vorbestimmten, in Gurtauszugsrichtung wirkenden Last eingerichtet ist; nach Abschalten der Kupplung wird somit das gurtaufrollerseitige Blockiersystem für die Einleitung der auftretenden Kräfte in das Gehäuse des Gurtaufrollers wirksam. In alternativen Ausführungsbeispielen der Erfindung kann dabei vorgesehen sein, daß die Kupplung entweder als Reibkupplung oder als Abreißkupplung ausgebildet ist.

In einer alternativen Ausführungsform kann vorgesehen sein, daß die Kupplung zwischen Abtriebsrad und Gurtwelle zu einem Aufheben der über das Abtriebsrad auf die Gurtwelle wirkenden Vorverriegelung bei Ansteuerung durch ein externes Signal eingerichtet ist; insoweit ist eine Aufhebung der Kupplungswirkung auch denkbar auf ein von der Airbagelektronik hin abgegebenes Signal, da im Rahmen der Airbagelektronik die bei einem Unfall auftretenden Bedingungen festgestellt und insoweit das im Unfallgeschehen wirksame Sicherheitssystem des Kraftfahrzeuges ausgelöst wird. Dieses Auslösesignal kann dann gegebenenfalls vor dem Auftreten einer entsprechenden Belastung an der Gurtwelle bereits zur Aufhebung der Kupplungswirkung zwischen Strafferantrieb bzw. Abtriebsrad und Gurtwelle herangezogen werden.

In der Zeichnung ist ein Ausführungsbeispiel der Erfindung wiedergegeben, welches nachstehend beschrieben ist. Es zeigen:
- Fig. 1: einen Sicherheitsgurtaufroller mit Vorstraffeinrichtung in einer Gesamtansicht,
- Fig. 2: den Sicherheitsgurtaufroller gemäß Figur 1 in einer Seitenansicht seiner Strafferseite mit Vorstraffeinrichtung und Vorverriegelung.

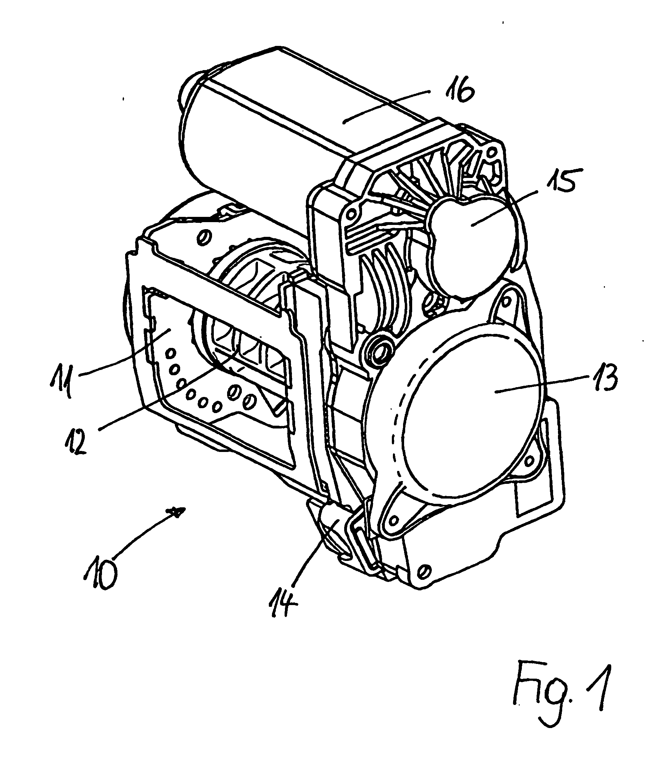

Der aus Figur 1 ersichtliche Sicherheitsgurtaufroller 10 hat ein U-förmiges Gehäuse 11, in dessen U-Schenkeln eine Gurtwelle 12 in an sich bekannter Weise gelagert ist. Die Gurtwelle 12 steht unter der Wirkung einer in einer Federkassette 13 angeordneten Aufwickelfeder, die nach Abwickeln des nicht dargestellten Gurtbandes von der Gurtwelle 12 beim Ablegen des Sicherheitsgurtes für das Wiederaufwickeln des Gurtbandes auf der Gurtwelle 12 sorgt. Auf der in Figur 1 nicht weiter dargestellten, der der Anbringung der Federkassette 13 gegenüberliegenden Seite des Gehäuses 11 liegenden Systemseite ist das in seinen Einzelheiten nicht dargestellte, insoweit also als bekannt vorauszusetzende Blockiersystem des Gurtaufrollers angeordnet, welches mittels gurtbandsensitiv bzw. fahrzeugsensitiv wirkender Steuersysteme in seiner Funktion anzusteuern ist.

Auf der in Figur 1 ersichtlichen Seite des Gehäuses 11 ist zusätzlich zu der Federkassette 13 mit dem Bezugszeichen 14 eine Kraftbegrenzungseinrichtung angedeutet, die nach Ansprechen der aufrollerseitigen Blockiersysteme und dadurch blockierter Gurtwelle 12 für eine Begrenzung der auf den Körper des angeschnallten Insassen einwirkenden Belastung sorgt; eine derartige Kraftbegrenzungseinrichtung ist im Stand der Technik bekannt und im übrigen nicht Gegenstand der vorliegenden Erfindung.

Zusätzlich ist auf der vorstehend beschriebenen Seite des Gurtaufrollergehäuses 11 ein Vorstraffergehäuse 15 dargestellt, dem ein Elektromotor 16 als Strafferantrieb zugeordnet ist.

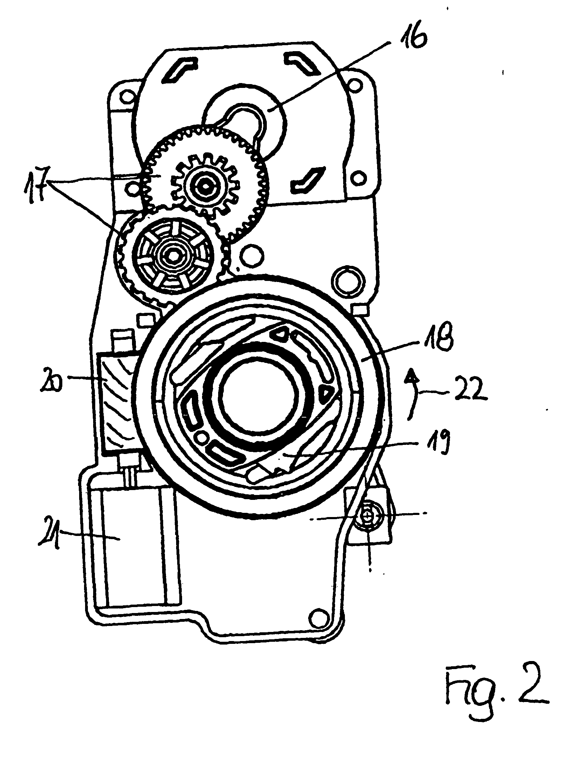

Wie sich hierzu näher aus Figur 2 entnehmen läßt, wirkt der Elektromotor 16 mit seiner Abtriebswelle über ein Getriebe 17 auf ein Abtriebsrad 18, welches mit einer im einzelnen nicht dargestellten Außenverzahnung, im vorliegenden Fall einer Schneckenverzahnung, versehen ist. Das Abtriebsrad 18 ist über eine Kupplung mit der Gurtwelle 12 kuppelbar, wobei von dieser Kupplung eine Zahnklinke 19 als Bestandteil der als Reibkupplung ausgebildeten Kupplung dargestellt ist.

Die während des Betriebs des Vorstraffers wirksame Vorverriegelungseinrichtung wird von einer selbsthemmenden Schnecke 20 gebildet, die in ständigem Kämmeingriff mit der Schneckenverzahnung des Abtriebsrades 18 steht, wobei die Schnecke 20 bei dem dargestellten Ausführungsbeispiel von einem gesonderten Antriebsmotor 21 in den beiden Drehrichtungen des Abtriebsrades 18 in Drehung versetzbar ist. Wie nicht weiter dargestellt kann auch vorgesehen sein, die Schnecke 20 über ein zusätzliches Getriebe an dem Elektromotor 16 anzukuppeln, so daß auch in diesem Fall die Schnecke 20 sich jeweils in der Drehrichtung des Abtriebsrades 18 aktiv dreht.

Kommt es in entsprechenden Fahrsituationen zu einer Vorstraffung des Gurtaufrollers 10, tritt der Elektromotor 16 als Strafferantrieb in Funktion und dreht über das zwischengeschaltete Getriebe 17 das Abtriebsrad 18 in die mit Pfeil 22 gekennzeichnete Gurteinzugsrichtung (entgegen dem Uhrzeigersinn). Gleichzeitig dreht der Elektromotor 21 die Schnecke 20 synchron in der mit der Drehung des Abtriebsrades 18 gleichgerichteten Drehrichtung, so daß sich eine Unterstützung der Antriebsleistung des Elektromotors 16 ergibt. Ist die Vorstraffung beendet, ohne daß eine Leistungsstraffung eintritt oder im Falle eines Unfalls die Aufhebung der Kupplungsverbindung zwischen Abtriebsrad 18 und Gurtwelle 12 erfolgt, werden der Strafferantrieb (Elektromotor 16) und der Schneckenantrieb (Elektromotor 21) abgeschaltet. In diesem Zustand führt auch ein Zug am Gurtband in Gurtauszugsrichtung nicht zu einer entsprechenden Drehung der Gurtwelle 12, weil das Abtriebsrad 18 und damit die an das Abtriebsrad 18 gekuppelte Gurtwelle 12 über das selbsthemmende Schneckengetriebe 20, 21 blockiert sind. Der angeschnallte Fahrzeuginsasse wird in dieser Phase durch die Selbsthemmung des Getriebes gehalten, und eine Selbstblockade des Gurtaufrollers 10 durch ein mit einer Rückdrehung der Gurtwelle 12 verbundenes Ansprechen seines Blockiersystems ist vermieden.

Nach Beendigung der Vorstraffung erfolgt über den Elektromotor 16 eine Rückdrehung des Abtriebsrades 18 in Gurtauszugsrichtung (entgegen Pfeil 22; im Uhrzeigersinn), wobei der Elektromotor 21 als Antriebsmotor für die Schnecke 20 diese in der gleichen Drehrichtung wie das Abtriebsrad und mit dem gleichen Drehwinkel dreht. Das durch die Vorstraffung vorgespannte Gurtsystem wird durch die Rückdrehung des Antriebes sanft entlastet, wodurch die zwischen Abtriebsrad 18 und Gurtwelle 12 eingerichtete Kupplung ausgesteuert wird; die Funktionen des selbstsperrenden Gurtaufrollers sind gewährleistet.

Kommt es während des Straffvorganges zu einem Unfall, so daß über das fahrzeugsensitive bzw. gurtbandsensitive Steuersystem die Blockierung der Gurtwelle mit einer Aussteuerung des entsprechend vorgesehenen Sperrgliedes eingeleitet wird, so wird die Kupplung zwischen Gurtwelle 12 und Abtriebsrad 18 aufgehoben. Ist die Kupplung als Reibkupplung ausgebildet, so geschieht die Trennung über die auftretenden Kräfteverhältnisse; alternativ kann eine sogenannte Abreißkupplung vorgesehen sein.

Es ist auch möglich, eine aktive Trennung der Kupplung auf ein externes Signal hin vorzunehmen und die Kupplung hierzu entsprechend einzurichten, wobei dieses externe Signal aus der sogenannten Airbagelektronik gewonnen werden kann, die bereits vor Auftreten der an der Gurtwelle 12 auftretenden Last einen Unfall dedektiert und für die Auslösung der Sicherheitssysteme sorgt und deren Signal somit auch für die vorherige Trennung der Gurtwelle 12 von dem Strafferantrieb heranziehbar ist.

## Patentansprüche

1. Sicherheitsgurtaufroller (10), insbesondere für den Einsatz in Kraftfahrzeugen, mit einem fahrzeugsensitiv und/oder gurtbandsensitiv angesteuerten Blockiersystem und mit einer auf die Gurtwelle (12) einwirkenden Straffeinrichtung, wobei die Gurtwelle (12) mit einem von einem Elektromotor (16) als Strafferantrieb über ein zwischengeschaltetes Getriebe (17) angetriebenen Abtriebsrad (18) kuppelbar ist und das Getriebe (17) mindestens eine Schaltstellung zur Ausführung einer Vorabstraffung des Insassen durch Rückdrehung der Gurtwelle (12) in Aufwickelrichtung aufweist, **dadurch gekennzeichnet, daß** in den Kraftübertragungsweg zwischen Elektromotor (16) und Gurtwelle (12) eine während der Drehung des Abtriebsrades (18) in Gurteinzugsrichtung und in Gurtauszugsrichtung angesteuerte und nur während des Straffvorganges wirksame Vorverriegelungseinrichtung (20, 21) für die Gurtwelle (12) eingeschaltet ist, deren Verriegelung mit der Gurtwelle (12) bei Überschreiten einer vorbestimmten, in Gurtauszugsrichtung auf die Gurtwelle (12) einwirkenden Last aufgehoben wird.

2. Sicherheitsgurtaufroller nach Anspruch 1, **dadurch gekennzeichnet, daß** die Vorverriegelungseinrichtung durch ein selbsthemmend ausgelegtes Getriebe mit einem mit dem außenverzahnten Abtriebsrad (18) in ständigem Eingriff stehenden und von einem Antrieb (16, 21) angetriebenen Getriebeteil (20) gebildet ist.

3. Sicherheitsgurtaufröller nach Anspruch 2, **dadurch gekennzeichnet, daß** der Antrieb (16, 21) für die Drehung des Getriebeteils (20) in beiden Drehrichtungen des Abtriebsrades (18) eingerichtet ist.

4. Sicherheitsgurtaufroller nach Anspruch 2 oder 3, **dadurch gekennzeichnet, daß** zum Antrieb des Getriebeteils (20) ein gesonderter Elektromotor (21) vorgesehen ist.

5. Sicherheitsgurtaufroller nach Anspruch 2 oder 3, **dadurch gekennzeichnet, daß** das Getriebeteil (20) an den den Strafferantrieb bildenden Elektromotor (16) gekoppelt ist.

6. Sicherheitsgurtaufroller nach einem der Ansprüche 2 bis 5, **dadurch gekennzeichnet, daß** das angetriebene Getriebeteil aus einer selbsthemmend ausgelegten und mit der Schneckenverzahnung des Abtriebsrades (18) kämmenden Schnecke (20) besteht.

7. Sicherheitsgurtaufroller nach einem der Ansprüche 2 bis 5, **dadurch gekennzeichnet, daß** das angetriebene Getriebeteil aus einem mit der Schneckenverzahnung des Abtriebsrades (18) kämmenden und durch Anordnung einer Gegenverzahnung selbsthemmend ausgelegten Stirnrad besteht.

8. Sicherheitsgurtaufroller nach einem der Ansprüche 1 bis 7, **dadurch gekennzeichnet, daß** die Kupplung zwischen Abtriebsrad (18) und Gurtwelle (12) zu einem Aufheben der über das Abtriebsrad (18) auf die Gurtwelle (12) wirkenden Vorverriegelung bei Auftreten der vorbestimmten, in Gurtauszugsrichtung wirkenden Last eingerichtet ist.

9. Sicherheitsgurtaufroller nach Anspruch 8, **dadurch gekennzeichnet, daß** die Kupplung als Reibkupplung ausgebildet ist.

10. Sicherheitsgurtaufroller nach Anspruch 8, **dadurch gekennzeichnet, daß** die Kupplung als Abreißkupplung ausgebildet ist.

11. Sicherheitsgurtaufroller nach einem der Ansprüche 1 bis 7, **dadurch gekennzeichnet, daß** die Kupplung zwischen Abtriebsrad (18) und Gurtwelle (12) zu einem Aufheben der über das Abtriebsrad (18) auf die Gurtwelle (12) wirkenden Vorverriegelung bei Ansteuerung durch ein externes Signal eingerichtet ist.

## Claims

1. Seat belt retractor (10), in particular for use in motor vehicles, with a blocking system which is controlled in a vehicle-sensitive and/or belt-sensitive manner, and with a tightening device which acts on the belt shaft (12), wherein the belt shaft (12) can be coupled to a driven wheel (18), which is driven by an electric motor (16) as tightener drive via an interconnected gear unit (17), and the gear unit (17) has at least one shift position for pre-tightening the occupant by turning back the belt shaft (12) in the wind-up direction, **characterised in that** a pre-locking device (20, 21) for the belt shaft (12) is connected into the power transmission path between the electric motor (16) and the belt shaft (12), which device is controlled during rotation of the driven wheel (18) in the belt pull-in direction and in the belt pull-out direction, is only active during the tightening process and is unlocked from the belt shaft (12) when a predetermined load acting on the belt shaft (12) in the belt pull-out direction is exceeded.

2. Seat belt retractor according to Claim 1, **characterised in that** the pre-locking device is formed by a gear unit of self-inhibiting design with a gear part (20) which is constantly in mesh with the externally toothed driven wheel (18) and is driven by a drive (16, 21).

3. Seat belt retractor according to Claim 2, **characterised in that** the drive (16, 21) is adapted to rotate the gear part (20) in both directions of rotation of the driven wheel (18).

4. Seat belt retractor according to Claim 2 or 3, **characterised in that** a separate electric motor (21) is provided to drive the gear part (20).

5. Seat belt retractor according to Claim 2 or 3, **characterised in that** the gear part (20) is coupled to the electric motor (16) forming the tightener drive.

6. Seat belt retractor according to any one of Claims 2 to 5, **characterised in that** the driven gear part consists of a worm (20) which is of self-inhibiting design and meshes with the worm tooth system of the driven wheel (18).

7. Seat belt retractor according to any one of Claims 2 to 5, **characterised in that** the driven gear part consists of a spur gear which meshes with the worm tooth system of the driven wheel (18) and is of self-inhibiting design through the provision of a mating tooth system.

8. Seat belt retractor according to any one of Claims 1 to 7, **characterised in that** the coupling between the driven wheel (18) and the belt shaft (12) is adapted to cancel the pre-lock acting on the belt shaft (12) via the driven wheel (18) when the predetermined load acting in the belt pull-out direction occurs.

9. Seat belt retractor according to Claim 8, **characterised in that** the coupling is formed as a friction coupling.

10. Seat belt retractor according to Claim 8, **characterised in that** the coupling is formed as a breakaway coupling.

11. Seat belt retractor according to any one of Claims 1 to 7, **characterised in that** the coupling between the driven wheel (18) and the belt shaft (12) is adapted to cancel the pre-lock acting on the belt shaft (12) via the driven wheel (18) when controlled by an external signal.

## Revendications

1. Enrouleur de ceinture de sécurité (10), en particulier pour une utilisation sur des véhicules automobiles, comprenant un système de blocage actionné par sensibilité du véhicule et/ou de la sangle et un dispositif de tension agissant sur l'arbre de ceinture (12), l'arbre de ceinture (12) pouvant être couplé avec une roue de sortie (18) entraînée par un moteur électrique (16) comme commande de tendeur au moyen d'un engrenage (17) intercalé et l'engrenage (17) présentant au moins une position de commutation pour l'exécution d'un serrage préalable du passager par rotation arrière de l'arbre de ceinture (12) dans le sens d'enroulement, **caractérisé en ce qu'**un dispositif de préverrouillage (20, 21) pour l'arbre de sangle (12) actionné pendant la rotation de la roue de sortie (18) dans le sens d'entrée de sangle et dans le sens de sortie de sangle et efficace seulement pendant l'opération de serrage est inséré dans la course de transmission de force entre le moteur électrique (16) et l'arbre de ceinture (12), dispositif dont le verrouillage avec l'arbre de ceinture (12) est supprimé en cas de dépassement d'une charge prédéfinie et agissant dans le sens de sortie de sangle sur l'arbre de ceinture.

2. Enrouleur de ceinture de sécurité selon la revendication 1, **caractérisé en ce que** le dispositif de préverrouillage est formé par un engrenage conçu de façon autobloquante avec une partie d'engrenage (20) en prise constante avec la roue de sortie (18) à denture extérieure et entraînée par un entraînement (16, 21).

3. Enrouleur de ceinture de sécurité selon la revendication 2, **caractérisé en ce que** l'entraînement (16, 21) pour la rotation de la partie d'engrenage est aménagé dans les deux sens de rotation de la roue de sortie (18).

4. Enrouleur de ceinture de sécurité selon la revendication 2 ou 3, **caractérisé en ce qu'**un moteur électrique (21) séparé est prévu pour l'entraînement de la partie d'engrenage (20).

5. Enrouleur de ceinture de sécurité selon la revendication 2 ou 3, **caractérisé en ce que** la partie d'engrenage (20) est couplée sur le moteur électrique (16) formant l'entraînement de tendeur.

6. Enrouleur de ceinture de sécurité selon l'une quelconque des revendications 2 à 5, **caractérisé en ce que** la partie d'engrenage entraînée se compose d'une vis sans fin (20) conçue de façon autobloquante et s'engrenant avec la denture à vis sans fin de la roue de sortie (18).

7. Enrouleur de ceinture de sécurité selon l'une quelconque des revendications 2 à 5, **caractérisé en ce que** la partie d'engrenage entraînée se compose d'une roue droite s'engrenant avec la denture à vis sans fin de la roue de sortie (18) et conçue de façon autobloquante par la disposition d'une contre-denture.

8. Enrouleur de ceinture de sécurité selon l'une quelconque des revendications 1 à 7, **caractérisé en ce que** l'accouplement entre la roue de sortie (18) et l'arbre de sangle (12) est aménagé pour une suppression du préverrouillage agissant par la roue de sortie (18) sur l'arbre de ceinture (12) en cas d'apparition de la charge prédéfinie et agissant dans le sens de sortie de sangle.

9. Enrouleur de ceinture de sécurité selon la revendication 8, **caractérisé en ce que** l'accouplement est réalisé sous la forme d'un accouplement par frottement.

10. Enrouleur de ceinture de sécurité selon la revendication 8, **caractérisé en ce que** l'accouplement est réalisé sous la forme d'un accouplement par rupture.

11. Enrouleur de ceinture de sécurité selon l'une quelconque des revendications 1 à 7, **caractérisé en ce que** l'accouplement entre la roue de sortie (18) et l'arbre de ceinture (12) est aménagé pour une suppression du préverrouillage agissant au moyen de la roue de sortie (18) sur l'arbre de ceinture (12) en cas d'actionnement par un signal extérieur.
